# EUROPÄISCHE PATENTSCHRIFT

(11) **EP 1 567 596 B1**
(45) Veröffentlichungstag und Bekanntmachung des Hinweises auf die Patenterteilung: **23.01.2008**
(21) Anmeldenummer: 03812151.3
(22) Anmeldetag: 17.11.2003
(51) Int. Cl.: C08L 101/00, C08L 51/04, C08L 55/02

(54) **SCHLAGZÄHMODIFIZIERTE BLENDS**
IMPACT-RESISTANT MODIFIED BLENDS
MELANGES A RESILIENCE MODIFIEE

(30) Priorität: 29.11.2002 DE 10255824
(43) Veröffentlichungstag der Anmeldung: 31.08.2005
(73) Patentinhaber: Bayer MaterialScience AG, 51368 Leverkusen (DE)
(72) Erfinder: EICHENAUER, Herbert, 41539 Dormagen (DE); URBANNECK, Bernd, 41238 Mönchengladbach (DE); ECKEL, Thomas, 41540 Dormagen (DE); WENZ, Eckhard, 50679 Köln (DE)
(86) Internationale Anmeldenummer: PCT/EP2003/012808
(87) Internationale Veröffentlichungsnummer: WO 2004/050765

(56) Entgegenhaltungen:
- EP-A- 0 704 488
- EP-A- 1 273 601
- WO-A-00/06648

## Beschreibung

Die Erfindung betrifft mit cogefälltem Pfropfpolymerisat schlagzähmodifizierte thermoplastische Blends, ein Verfahren zu deren Herstellung sowie daraus hergestellte Formteile.

Thermoplastische Formmassen aus Polycarbonaten und ABS-Polymerisaten sind seit langem bekannt. So beschreibt DE-A 1 170 141 gut verarbeitbare Formmassen aus Polycarbonaten und Pfropfpolymerisaten von Monomermischungen aus Acrylnitril und einem aromatischen Vinylkohlenwasserstoff auf Polybutadien.

In der DE-A 1 810 993 wird die verbesserte Wärmestandfestigkeit von Polycarbonat in Abmischung mit ABS-Pfropfpolymerisaten bzw. Copolymerisaten auf Basis von α-Methylstyrol hervorgehoben.

Gegenstand der DE-A 22 59 565 und DE-A 23 29 548 ist die verbesserte Fließnahtfestigkeit von PC/ABS-Formmassen, wobei in beiden Schriften als Bestandteil der ABS-Komponente jeweils Pfropfpolymerisate bestimmter Teilchengröße verwendet werden. Aus der EP-A 0 704 488 sind thermoplastische Formmassen mit einem Teilchendurchmesser von 0,20 bis 0,35 µm bekannt.

Die DE-A 28 18 679 lehrt, dass PC/ABS-Mischungen dann besonders hohe Tieftemperaturzähigkeiten aufweisen, wenn das ABS-Polymerisat zwei Pfropfmischpolymerisate mit unterschiedlichem Pfropfgrad enthält.

Es ist weiterhin bekannt, Polymerlatices zur Entfernung von Verunreinigungen oder Grobanteilen zu filtrieren. So wie beispielsweise in Houben Weyl XIV/1, Makromolekulare Stoffe 1, Seiten 348 bis 356 (Georg Thieme Verlag, Stuttgart, 1961) sowie in DE-A 4 126 483 und US-A 4 747 959 die Filtration von Kautschuklatices beschrieben. Zusammenhänge mit den mechanischen Eigenschaften sind aus diesem Stand der Technik nicht bekannt.

Die Aufgabe der vorliegenden Erfindung ist die Bereitstellung von schlagzähmodifizierten Zusammensetzungen mit optimierter Eigenschaftskombination aus guter Oberflächenqualität (insbesondere eine sehr niedrige Zahl an Fehlstellen, sogenannter "Stippen"), gutem Fließverhalten und guter Spannungsrissbeständigkeit (ESC-Verhalten). Die Zusammensetzungen können weiterhin mit Flammschutzmittel flammwidrig ausgerüstet sein. Flammwidrig ausgerüstete, schlagzähmodifizierte Zusammensetzungen eignen sich insbesondere für Dünnwandapplikationen wie Notebooks.

Es wurde gefunden, dass schlagzähmodifizierte Polycarbonat-Zusammensetzungen, die eine durch Cofällung erhaltene Mischung aus mindestens zwei Pfropfpolymerisaten enthalten, die gewünschten Eigenschaften aufweisen.

Gegenstand der Erfindung sind daher Zusammensetzungen enthaltend
A) einen Thermoplasten oder eine Mischung von Thermoplasten ausgewählt aus mindestens einem aus der Gruppe der Polycarbonate, Polyestercarbonate, Polyamide, Polyalkylenterephthalate und Polyoxymethylen und
B) eine durch Cofällung erhaltene Mischung aus mindestens zwei Pfropfpolymerisaten B.1 und B.2,
wobei die Pfropfpolymerisate B.1 und B.2 durch Emulsionspolymerisation hergestellt werden, wobei das Pfropfpolymerisat B.1 durch Redox-Initiierung und das Pfropfpolymerisat B.2 durch Persulfat-Initierung hergestellt werden.

Bevorzugt sind Zusammensetzungen enthaltend
A) 10 bis 99, vorzugsweise 20 bis 98,5, insbesondere 30 bis 98 Gew.-Teile Thermoplast oder eine Mischung von Thermoplasten ausgewählt aus mindestens einem aus der Gruppe der Polycarbonate, Polyestercarbonate, Polyamide, Polyalkylenterephthalate und Polyoxymethylen,
B) 0,5 bis 90, vorzugsweise 1,5 bis 80, insbesondere 2 bis 70 Gew.-Teile einer durch Cofällung erhaltenen Mischung aus mindestens zwei Pfropfpolymerisaten B.1 und B.2,
C) 0 bis 20, bevorzugt 0 bis 18, besonders bevorzugt 0 bis 16 Gew.-Teilen Flammschutzmittel,
D) 0 bis 5 Gew.-Teile fluoriertes Polyolefin,
wobei die Pfropfpolymerisate B.1 und B.2 durch Emulsionspolymerisation hergestellt werden; wobei das Pfropfpolymerisat B.1 durch Redox-Initiierung und das Pfrofpolymerisat B.2 durch Persulfat-Initierung hergestellt werden

Diese Bestandteile und weitere in den erfindungsgemäßen Zusammensetzungen einsetzbare Komponenten werden anschließend beispielhaft erläutert.
In Zusammensetzungen, die kein Flammschutzmittel enthalten, beträgt die Menge an Komponente A) vorzugsweise 40 bis 95 Gew.-Teile, insbesondere 40 bis 90 Gew.-Teile, ganz besonders bevorzugt 50 bis 85 Gew.-Teile und die Menge an Komponente B) vorzugsweise 5 bis 60, insbesondere 10 bis 60 Gew.-Teile, ganz besonders bevorzugt 15 bis 50 Gew.-Teile.

### Komponente A

Erfindungsgemäß geeignete aromatische Polycarbonate und aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z.B. DE-A 3 077 934).

Die Herstellung aromatischer Polycarbonate erfolgt z.B. durch Schmelzeverfahren oder durch Umsetzung von Diphenolen mit Kohlensäurehalogeniden, vorzugsweise Phosgen und/oder mit aromatischen Dicarbonsäuredihalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 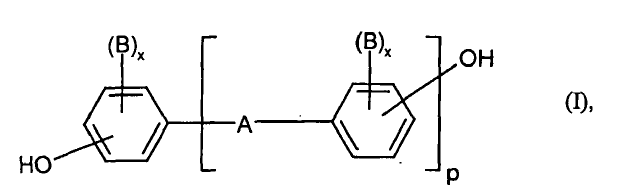 wobei
- A: eine Einfachbindung, C₁ bis C₅-Alkylen, C₂ bis C₅-Alkyliden, C₅ bis C₆-cycloalkyliden, -O-, -SO-, -CO-, -S-, -SO₂-, C₆ bis C₁₂-Arylen an das weitere aromatische gegebenenfalls Heteroatome enthaltende Ringe kondensiert sein können,
oder ein Rest der Formel (II) oder (III) 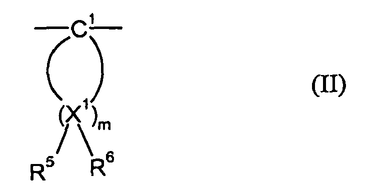 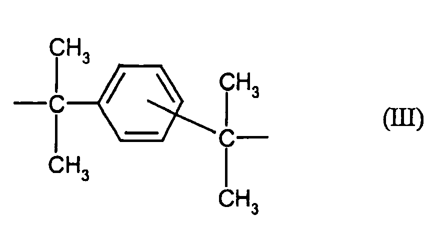
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X ¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆ cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-ditert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate und Polyestercarbonate haben mittlere Gewichtsmittelmolekulargewichte (M_{w}, gemessen z.B. durch Ultrazentrifuge oder Streulichtmessung) von 10 000 bis 200 000, vorzugsweise 15 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US-A 3 419 634) und nach literaturbekannten Verfahren herstellbar. Die Herstellung Polydiorganosiloxan-haltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf mol Diphenol und im Falle von Monocarbonsäurechlorid-Kettenabbrecher auf mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Erfindungsgemäß geeignete Polyamide (gemäß Komponente A) sind bekannt oder nach literaturbekannten Verfahren herstellbar.

Erfindungsgemäß geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexa-methylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 Kohlenstoffatomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan, Bis-(4-aminocyclohexyl)-propan, 3,3'-Dimethyl-4,4'-diamino-dicyclohexylmethan, 3-Aminomethyl-3,5,5-trimethylcyclohexylamin, 2,5- und/oder 2,6-Bis-(aminomethyl)-norboman und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten werden, sind geeignet, ferner Copolymere, die unter Zusatz von Aminocarbonsäuren wie e-Aminocapronsäure, w-Aminoundecansäure oder w-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4-Diaminodicyclohexylmethan, Isophorondiamin, 2,2,4- und/oder 2,4,4-Trimethylhexa-methylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus

| | |
|---|---|
| 70 bis 99 mol% | des 4,4'-Diamino-Isomeren, |
| 1 bis 30 mol% | des 2,4'-Diamino-Isomeren und |
| 0 bis 2 mol% | des 2,2'-Diamino-Isomeren, |

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.%igen Lösung in m-Kresol bei 25°C) von 2,0 bis 5,0, besonders bevorzugt von 2,5 bis 4,0 auf.

Die Polyamide können allein oder in beliebiger Mischung untereinander in Komponente A enthalten sein.

Geeignete Polyalkylenterephthalate sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen drei- oder vierwertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 1 Gewichtsteile) bei 25°C im Ubbelohde-Viskosimeter.

Die Polyalkylenterephthalate lassen sich nach bekannten Methoden herstellen (z.B. Kunststoff-Handbuch, Band VIII, S. 695 ff., Carl-Hanser-Verlag, München 1973).

Darüber hinaus sind Polyoxymethylene als Komponente A) ebenfalls geeignet.

### Komponente B

Die Komponente B umfasst eine durch Cofällung erhaltene Mischung aus mindestens zwei Pfropfpolymerisaten B.1 und B.2 von jeweils
i) 5 bis 95, vorzugsweise 20 bis 80, besonders bevorzugt 25 bis 60, insbesondere 30 bis 50 Gew.-%, wenigstens eines Vinylmonomeren auf
ii) 95 bis 5, vorzugsweise 80 bis 20, besonders bevorzugt 75 bis 40, insbesondere 30 bis 50 Gew.-% einer oder mehrerer Pfropfgrundlagen mit Glasübergangstemperaturen < 10°C, vorzugsweise < 0°C, besonders bevorzugt < -20°C,
   wobei die Pfropfpolymerisate B.1 und B.2 durch Emulsionspolymerisation hergestellt werden, wobei das Pfropfpolymerisat B.1 durch Redox-Initiierung und das Pfropfpolymerisat B.2 durch Persulfat-Initierung hergestellt werden.

Die Pfropfgrundlage ii) hat im allgemeinen eine mittlere Teilchengröße (d₅₀-Wert) von 0,05 bis 5 µm, vorzugsweise 0,10 bis 0,5 µm, besonders bevorzugt 0,20 bis 0,40 µm.

Monomere i) sind vorzugsweise Gemische aus
i1) 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder (Meth)Acrylsäure-(C₁-C₈)-Alkylester (wie z.B. Methylmethacrylat, Ethylmethacrylat) und
i2) 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere i1) sind ausgewählt aus mindestens einem der Monomere Styrol, α-Methylstyrol und Methylmethacrylat, bevorzugte Monomere i2) sind ausgewählt aus mindestens einem der Monomere Acrylnitril, Maleinsäureanhydrid und Methylmethacrylat.

Besonders bevorzugte Monomere sind i1) Styrol und i2) Acrylnitril.

Für die Pfropfpolymerisate B. und B.2 geeignete Pfropfgrundlagen ii) sind beispielsweise Dienkautschuke, EP(D)M-Kautschuke, also solche auf Basis Ethylen/Propylen und gegebenenfalls Dien-Monomeren, weiterhin Acrylat-, Polyurethan-, Silikon-, Chloropren- und Ethylen/Vinylacetat-Kautschuke.

Bevorzugte Pfropfgrundlagen ii) sind Dienkautschuke. Unter Dienkautschuken im Sinne der vorliegenden Erfindung werden Dienkautschuke (z. B. auf Basis Butadien, Isopren etc.) oder Gemische von Dienkautschuken oder Copolymerisate von Dienkautschuken oder deren Gemische mit weiteren copolymerisierbaren Monomeren (z.B. gemäß i1) und i2)), bevorzugt Butadien-Styrol-Copolymere mit vorzugsweise bis zu 30 Gew.-% Styrol, verstanden, mit der Maßgabe, dass die Glasübergangstemperatur der Komponente ii) <10°C, vorzugsweise <0°C, besonders bevorzugt < -20°C liegt.

Besonders bevorzugt ist reiner Polybutadienkautschuk.

Geeignete Acrylatkautschuke gemäß ii) der Polymerisate B.1 und B.2 sind vorzugsweise Polymerisate aus Acrylsäurealkylestern, gegebenenfalls mit bis zu 40 Gew.-%, bezogen auf ii) anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage ii).

Bei cyclischen vernetzenden Monomeren mit mindestens 3 ethylenisch ungesättigten Gruppen ist es vorteilhaft, die Menge auf unter 1 Gew.-% der Pfropfgrundlage ii) zu beschränken.

Bevorzugte "andere" polymerisierbare, ethylenisch ungesättigte Monomere, die neben den Acrylsäureestern gegebenenfalls zur Herstellung der Pfropfgrundlage ii) dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage ii) sind Emulsionspolymerisate, die einen Gelgehalt von mindestens 60 Gew.-% aufweisen.

Weitere geeignete Pfropfgrundlagen gemäß ii) sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage ii) wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Besonders bevorzugte Polymerisate B.1 und B.2 sind z.B. ABS-Polymerisate (vorzugsweise durch Emulsionspolymerisation erzeugt), wie sie z. B. in der DE-A 2 035 390 (=US-A 3 644 574) oder in der DE-A 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage ii) beträgt im allgemeinen mindestens 30 Gew.-%, vorzugsweise mindestens 40 Gew.-% (in Toluol gemessen).

Die Pfropfcopolymerisate B.1 und B.2 werden durch Emulsionspolymerisation hergestellt.

Dabei wird das erfindungsgemäß einzusetzende Pfropfcopolymerisat B.1 durch Redox-Initüerung hergestellt.

Erfindungsgemäß geeignete Redoxinitiatorsysteme bestehen in der Regel aus einem organischen Oxidationsmittel und einem Reduktionsmittel, wobei im Reaktionsmedium zusätzlich Schwermetallionen vorhanden sein können; vorzugsweise wird ohne Schwermetallionen gearbeitet.

Erfindungsgemäß geeignete organische Oxidationsmittel sind beispielsweise und bevorzugt Di-tert.-butylperoxid, Cumolhydroperoxid, Dicyclohexylpercarbonat, tert.-Butylhydroperoxid, p-Menthanhydroperoxid oder Mischungen hieraus, besonders bevorzugt sind Cumolhydroperoxid und tert.-Butylhydroperoxid. H₂O₂ kann ebenfalls verwendet werden.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit^{®}C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfat, Zinn(II)-salzen wie z.B. Zinn(II)-chlorid, Titan(III)-salzen wie Titan(lI1)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit^{®}C).

Das erfindungsgemäß einzusetzende Pfropfcopolymerisat B.2 wird durch Persulfat-Initüerung hergestellt.

Erfindungsgemäß geeignete Persulfat-Verbindungen sind Ammoniumperoxodisulfat, Kaliumperoxodisulfat, Natriumperoxodisulfat oder Mischungen daraus.

### Herstellung der cogefällten Pfropfpolymerisate B.1 und B.2

Die Herstellung der erfindungsgemäß einzusetzenden cogefällten Pfropfpolymerisate erfolgt durch Abmischung mindestens eines unter Verwendung von mindestens einer Persulfatverbindung als Initiator hergestellten Pfropfpolymerisats B.2 in Latex-Form mit mindestens einem unter Verwendung von mindestens einem Redox-System als Initiator hergestellten Pfropfpolymerisat B.1 in Latex-Form, homogener Vermischung der Latices und Aufarbeitung des resultierenden Pfropfpolymerisatmischproduktes unter Verwendung bekannter Verfahren.

Beispiele für geeignete Aufarbeitungsverfahren sind z.B. die Ausfällung der Pfropfpolymerisat-Mischung durch Einwirkung von wässrigen Elektrolytlösungen wie z.B. Lösungen von Salzen (z.B. Magnesiumsulfat, Calciumchlorid, Natriumchlorid), Lösungen von Säuren (z.B. Schwefelsäure, Essigsäure) oder deren Mischungen, Ausfällung durch Einwirkung von Kälte (Gefrierkoagulation) oder direkte Gewinnung des Cofällproduktes aus dem Latex durch Sprühtrocknung.

Im Falle der Ausfällung der Pfropfpolymerisat-Mischung schließen sich üblicherweise ein Waschschritt (vorzugsweise mit Wasser) und ein Trockenschritt (z.B. in einem Fließbetttrockner oder einem Stromtrockner) an.

Ein bevorzugtes Aufarbeitungsverfahren nach der Ausfällung stellt die in EP-A 867 463 beschriebene Abmischung des feuchten Pfropfpolymerisatgemisches mit einer Thermoplastharz-Schmelze in einem Knetreaktor dar. Einzelheiten dieses Aufarbeitungsverfahrens sind ebenfalls in der EP-A 867 463 beschrieben. Die nach diesem Aufarbeitungsverfahren erhaltenen Mischungen aus Pfropfpolymerisat-Mischung und Thermoplastharz B.3 (insbesondere Styrol/Acrylnitril-Copolymerisat) werden vorzugsweise zur Herstellung der erfindungsgemäßen Formmassen eingesetzt.

Geeignete Thermoplastharze gemäß Komponente B.3 sind Vinyl(co)Polymerisate. Sie sind harzartig, thermoplastisch und kautschukfrei. Es handelt sich dabei um Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- B.3.1: 50 bis 99, vorzugsweise 60 bis 80 Gew.-Teilen Vinylaromaten und/oder kemsubstituierten Vinylaromaten wie beispielsweise Styrol, α-Methylstyrol, p-Methylstyrol, p-Chlorstyrol) und/oder (Meth)Acrylsäure-(C₁-C₈)-Alkylester wie z.B. Methylmethacrylat, Ethylmethacrylat), und
- B.3.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Besonders bevorzugt ist das Copolymerisat aus Styrol und Acrylnitril.

Die Pfropfpolymerisate B.1 und B.2 können in beliebigen Mischungsverhältnissen cogefällt werden. Vorzugsweise beträgt das Gew.-Verhältnis B.1:B.2 95:5 bis 5:95, besonders bevorzugt 90:10 bis 25:75 und ganz besonders bevorzugt 85:15 bis 50:50.

Besonders bevorzugt liegt das cogefällte Pfropfpolymerisat B in dispergierter Form in einer Matrix aus Vinyl(co)polymerisat B.3, vorzugsweise in einer Styrol/Acrylnitril-Copolymerisat-Matrix, vor. Dabei beträgt das Gew.-Verhältnis B:B.3 90:10 bis 10:90, vorzugsweise 80:20 bis 30:70 und besonders bevorzugt 70:30 bis 40:60.

Prinzipiell ist es auch möglich, die Thermoplastharzkomponente A), die durch Cofällung von B.1) und B.2) erhaltene Pfropfpolymerkomponente und die Vinyl(co)polymerisatkomponente B.3) sowie gegebenenfalls Additive in einem Compoundierschritt auf üblichen Compoundieraggregaten miteinander zu vermischen und dann mit den weiteren Komponenten, wie üblich zu mischen und weiter zu verarbeiten. Es ist weiterhin auch möglich, die Komponente B und B 3 separat mit den übrigen Komponenten und Additiven zu mischen und weiter zu verarbeiten.

### Komponente C

Die Zusammensetzungen können durch Zusatz geeigneter Additive flammwidrig ausgerüstet sein. Beispielhaft seien als Flammschutzmittel Halogenverbindungen, beispielsweise auf Basis von Chlor und Brom, Phosphor enthaltende Verbindungen sowie Silizium-Verbindungen, insbesondere Silikonverbindungen genannt.

Flammschutzmittel werden bevorzugt in einer Menge von 1 bis 18, besonders bevorzugt 2 bis 16 Gew.-Teilen eingesetzt.

Bevorzugt enthalten die Zusammensetzungen phosphorhaltige Flammschutzmittel aus den Gruppen der monomeren und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte Phosphorverbindungen können alleine oder in beliebiger Kombination mit anderen Flammschutzmitteln eingesetzt werden.

Bevorzugte Mono- und oligomere Phosphor- bzw. Phosphonsäureester sind Phosphorverbindungen der allgemeinen Formel (IV) 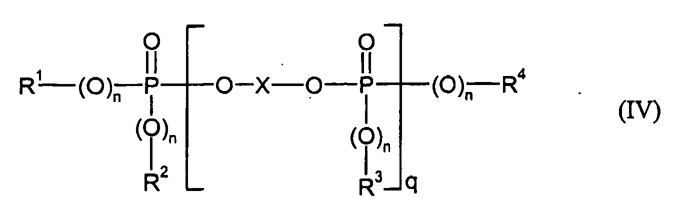 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
- n: unabhängig voneinander, 0 oder 1,
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30, bevorzugt 0,3 bis 20, besonders bevorzugt 0,5 bis 10, insbesondere 0,5 bis 6, ganz besonders bevorzugt 0,6 bis 2.
- X: steht besonders bevorzugt für 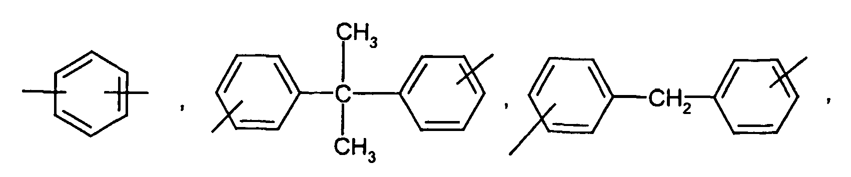 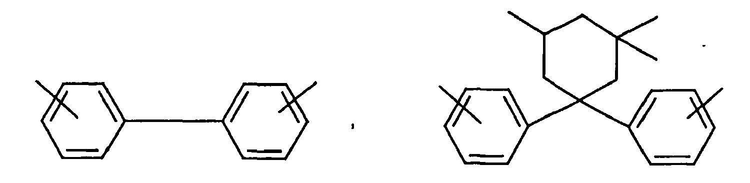
oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente C können auch Mischungen verschiedener Phosphate eingesetzt werden.

Phosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes-Diphoshat und Bisphenol A verbrücktes-Diphosphat.

Die Phosphorverbindungen gemäß Komponente C sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Weiterhin können Phosphonatamine und Phosphazene, wie sie in WO 00/00541 und WO O1/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Zusammensetzungen, die Flammschutzmittel enthalten, weisen bevorzugt folgende Zusammensetzung auf:

| | |
|---|---|
| Komponente A): | 40 bis 99, besonders bevorzugt 45 bis 95, insbesondere 55 bis 85 Gew.-Teile |
| Komponente B): | 0,5 bis 60, besonders bevorzugt 1 bis 40, insbesondere 3 bis 35 Gew.-Teile |
| Komponente C): | 0,5 bis 20, besonders bevorzugt 1 bis 18, insbesondere 2 bis 16 Gew.-Teile. |

### Komponente D

Die Flammschutzmittel entsprechend Komponente C werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen von Pfropfpolymerisaten (Komponente B.1 und B.2) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B. oder B.2) oder einem Copolymerisat gemäß B.3, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertern Polyolefin von 5 bis 95 Gew.-%, vorzugsweise 7 bis 60 Gew.%.

Die Antidripping-Mittel können in der erfindungsgemäßen Zusammensetzung in einer Menge von vorzugsweise 0,01 bis 3 Gew.-Teilen, besonders bevorzugt 0,05 bis 2 Gew.-Teilen und in am meisten bevorzugter Weise 0,1 bis 0,8 Gew.-Teilen enthalten sein.

### Komponente E (Weitere Zusätze)

Die erfindungsgemäßen Zusammensetzungen können weiterhin wenigstens eines der üblichen Additive, wie Gleit- und Entformungsmittel, beispielsweise Pentaerythrittetrastearat, Nukleiermittel, Antistatika, Stabilisatoren, Füll- und Verstärkungsstoffe sowie Farbstoffe und Pigmente enthalten.

Alle Gewichtsteil-Angaben in dieser Anmeldung sind so normiert, dass die Summe der Gewichtsteile der Komponenten A) bis E) in der Zusammensetzung gleich 100 gesetzt wird.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Formmassen können zur Herstellung von Formteilen jeder Art verwendet werden. Diese können durch Spritzguss, Extrusion und Blasformverfahren hergestellt werden. Eine weitere Form der Verarbeitung ist die Herstellung von Formteilen durch Tiefziehen aus zuvor hergestellten Platten oder Folien und das Verfahren der Folienhinterspritzung (IMD).

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; Automobilaußen- und -innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise auch zur Herstellung von folgenden Formteilen verwendet werden:
Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

Gegenstand der Erfindung sind daher auch ein Verfahren zu Herstellung der Zusammensetzungen sowie deren Verwendung zur Herstellung von Formteilen und die Formteile selbst.

### Beispiele

In den folgenden Beispielen sind die angegebenen Teile immer Gewichtsteile und die angegebenen % immer Gew.-%, wenn nicht anders angegeben.

### Eingesetzte Komponenten:

### Komponente A1

Lineares Polycarbonat auf Basis Bisphenol A mit einer relativen Lösungsviskosität von 1,28, gemessen in Methylenchlorid bei 25°C und in einer Konzentration von 0,5 g/100 ml.

### Komponente A2

Lineares Polycarbonat auf Basis Bisphenol A mit einer relativen Lösungsviskosität von 1,24 gemessen in Methylenchlorid bei 25°C und einer Konzentration von 0,5 g/100 ml.

### Komponente B1.1 (Vergleichsmaterial)

Pfropfpolymerisat hergestellt durch radikalische Emulsionspolymerisation (Verwendung eines Redox-Initiatorsystems aus tert.-Butylhydroperoxid und Natriumascorbat) von 40 Gew.-Teilen Styrol und Acrylnitril im Gew.-Verhältnis 73:27 in Gegenwart von 60 Gew.-Teilen eines teilchenförmigen vernetzten Polybutadienkautschuklatex (mittlerer Teilchendurchmesser d₅₀ = 345 nm), Aufarbeitung durch Ausfällung unter Einwirkung einer Magnesiumsulfat/Essigsäure = 1:1-Mischung, Waschen mit Wasser und Trocknen bei 70°C.

### Komponente B2.1 (Vergleichsmaterial)

Pfropfpolymerisat hergestellt durch radikalische Emulsionspolymerisation (Verwendung eines Persulfat-Initiatorsystems bestehend aus Kaliumperoxodisulfat) von 40 Gew.-Teilen Styrol und Acrylnitril im Gew.-Verhältnis 73:27 in Gegenwart von 60 Gew.-Teilen eines teilchenförmigen vernetzten Polybutadienkautschuklatex (mittlerer Teilchendurchmesser d₅₀ = 345 nm), Aufarbeitung durch Ausfällung unter Einwirkung einer Magnesiumsulfat/Essigsäure = 1:1-Mischung, Waschen mit Wasser und Trocknen bei 70°C.

### Komponente B2.2 (Vergleichsmaterial)

Pfropfpolymerisat hergestellt durch radikalische Emulsionspolymerisation (Verwendung eines Persulfat-Initiatorsystems bestehend aus Kaliumperoxodisulfat) von 25 Gew.-Teilen Styrol und Acrylnitril im Gew.-Verhältnis 73:27 in Gegenwart von 75 Gew.-Teilen eines teilchenförmigen vernetzten Polybutadienkautschuklatex (mittlerer Teilchendurchmesser d₅₀ = 345 nm), Aufarbeitung durch Ausfällung unter Einwirkung einer Magnesiumsulfat/Essigsäure = 1:1-Mischung, Waschen mit Wasser und Trocknen bei 70°C.

### Cofäll-Komnonente B1.1/ B2.1= 75:25 (erfindungsgemäß)

75 Gew.-Teile (bezogen auf Feststoff) des in Latexform vorliegenden Pfropfpolymerisats B1.1 und 25 Gew.-Teile (bezogen auf Feststoff) des in Latexform vorliegenden Pfropfpolymerisats B2.1 werden homogen vermischt, anschließend wird die Pfropfpolymerlatexmischung unter Einwirkung einer Magnesiumsulfat/Essigsäure = 1:1-Mischung ausgefällt. Nach dem Waschen mit Wasser wird bei 70°C getrocknet.

### Cofäll-Komponente B1.1/B2.1 = 50:50 (erfindungsgemäß)

50 Gew.-Teile (bezogen auf Feststoff) des in Latexform vorliegenden Pfropfpolymerisats B1.1 und 50 Gew.-Teile (bezogen auf Feststoff) des in Latexform vorliegenden Pfropfpolymerisats B2.1 werden homogen vermischt, anschließend wird die Pfropfpolymerlatexmischung unter Einwirkung einer Magnesiumsulfat/Essigsäure = 1:1-Mischung ausgefällt. Nach dem Waschen mit Wasser wird bei 70°C getrocknet.

### Cofäll-Komponente B1.1/B2.2 = 75:25 (erfindungsgemäß)

75 Gew.-Teile (bezogen auf Feststoff) des in Latexform vorliegenden Pfropfpolymerisats B1.1 und 25 Gew.-Teile (bezogen auf Feststoff) des in Latexform vorliegenden Pfropfpolymerisats B2.2 werden homogen vermischt, anschließend wird die Pfropfpolymerlatexmischung unter Einwirkung einer Magnesiumsulfat/Essigsäure = 1:1-Mischung ausgefällt. Nach dem Waschen mit Wasser wird bei 70°C getrocknet.

### Komponente B3

Durch radikalische Lösungspolymerisation hergestelltes Styrol/Acrylnitril-Copolymerisat mit einem Styrol/Acrylnitril-Gew.-Verhältnis von 72:28 und einer Grenzviskosität von 0,55 dl/g (Messung in Dimethylformamid bei 20°C).

### Gemisch aus Komponente B1.1 und Komponente B3

### (B1.1-B3, Vergleichsmaterial)

50 Gew.-Teile (bezogen auf Pfropfpolymergehalt) nach Ausfällung und Waschen vorliegende wasserfeuchte Komponente B 1.1 und 50 Gew.-Teile (bezogen auf Polymergehalt B3) in Schmelzeform vorliegende Komponente B3 werden gemäß EP-A 867 463, Beispiel 1, in einem Knetreaktor vermischt.

### Gemisch aus Cofäll-Komponente B1.11B2.I und Komponente B3

### (B1.1B2.1-B3, erfindungsgemäß)

50 Gew.-Teile (bezogen auf Pfropfpolymergehalt) nach Ausfällung und Waschen vorliegende wasserfeuchte Cofäll-Komponente B1.1B2.1 - 75:25 und 50 Gew.-Teile (bezogen auf Polymergehalt B3) in Schmelzeform vorliegende Komponente B3 werden gemäß EP-A 867 463, Beispiel 1, in einem Knetreaktor vermischt.

### Komponente C1

Triphenylphosphat:Disflamoll^{®}TP, Bayer AG, Leverkusen, Deutschland.

### Komponente C2

Bisphenol A-diphosphat: DVP 506, Great Lakes, UK.

### Komponente D

Koagulierte Mischung aus 50 Gew.-Teilen SAN-Copolymerisat und 50 Gew.-Teilen PTFE (Blendex^{®} 449, General Electric Plastics).

### Komponente E1

Pentaerythrittetrastearat

### Komponente E2

Phosphitstabilisator

### Herstellung und Ausprüfung der Formmassen

Das Vermischen der eingesetzten Komponenten mit den üblichen Verarbeitungshilfsmitteln erfolgt auf einem Doppelwellenextruder ZSK 25. Die Formkörper werden auf einer Spritzgießmaschine Typ Arburg 270E bei 260°C hergestellt.

Die Bestimmung der Kerbschlagzähigkeit erfolgt bei Raumtemperatur (aₖ^{RT}) oder bei -20°C (aₖ^{-20°C}) nach ISO 180/1A (Einheit: kJ/m²).

Die thermoplastische Fließfähigkeit MVR (Schmelzvolumenfließrate) wird nach ISO 1133 bestimmt (Einheit: cm³/10 min).

Das Brandverhalten wird nach UL-Subj. 94V an Stäben der Abmessung 127 x 12,7 x 1,6 mm gemessen.

Das Spannungsrissverhalten (ESC-Verhalten) wird an Stäben der Abmessung 80 x 10 x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung εₓ in Prozent) und bei Raumtemperatur im Testmedium gelagert. Das Spannungsrissverhalten wird über die Rissbildung bzw. den Bruch in Abhängigkeit von der Vordehnung im Testmedium beurteilt.

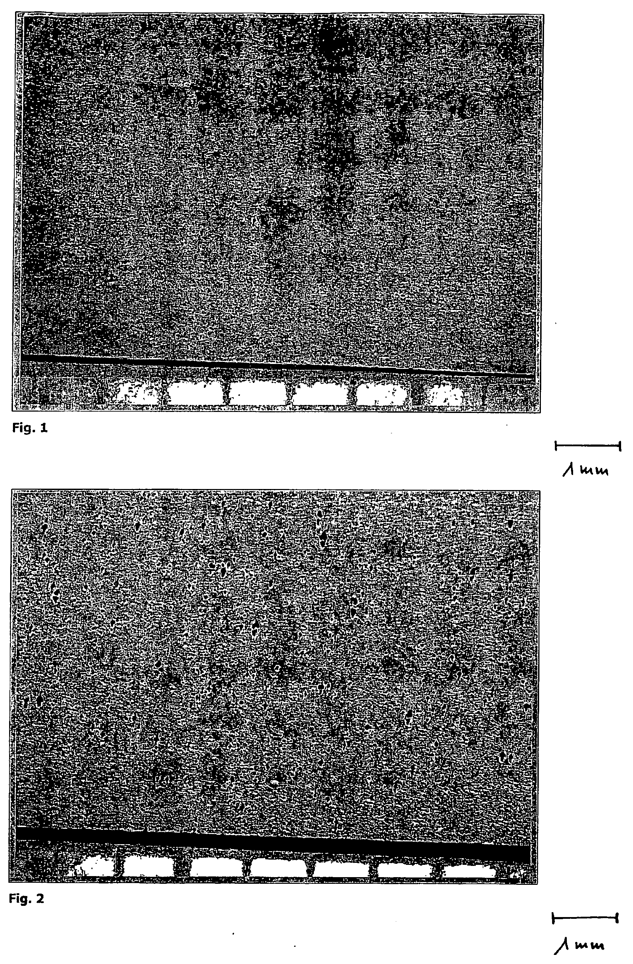

Die Beurteilung der Oberfläche erfolgt visuell an spritzgegossenen Platten der Maße 75 x 50 x 2 mm, wobei die Oberfläche mit Hilfe eines Mikroskops begutachtet wird. Die Oberflächenqualität lässt sich anschaulich anhand der Fig. 1 und 2 erkennen. Fig. 1 zeigt eine Oberfläche, die die Beurteilung + repräsentiert, Fig. 2 die Beurteilung - -

Folgende Klassifizierung wird benutzt:
- ++: Sehr gute Oberflächenqualität, minimale Anzahl von kleinen Fehlstellen, keinerlei große Fehlstellen
- +: Gute Oberflächenqualität, geringe Anzahl von kleinen Fehlstellen, minimale Anzahl von großen Fehlstellen
- o: Mittlere, d.h. noch akzeptable Oberflächenqualität, geringe Anzahl von kleinen Fehlstellen und geringe Anzahl von großen Fehlstellen
- -: Schlechte Oberflächenqualität, hohe Anzahl von kleinen Fehlstellen, deutlicher Anteil von großen Fehlstellen.
- --: Sehr schlechte Oberflächenqualität, sehr hohe Anzahl von kleinen und großen Fehlstellen.

Fehlstellen im Sinne der vorliegenden Erfindungen sind jegliche Abweichungen von einer ebenen und glatten Oberfläche, beispielsweise Vertiefungen (Löcher) oder Erhebungen, rauhe Oberfläche.

**Tabelle 1**

| Zusammensetzungen und Eigenschaften der Formmassen | | | | | | |
|---|---|---|---|---|---|---|
| Komponenten (Gew.-Teile) | 1 | 2 | 3 | 4 (Vgl.) | 5 (Vgl.) | 6 (Vgl.) |
| A1 | 43 | 43 | 43 | 43 | 43 | 43 |
| B1.1 | - | - | - | 24 | - | - |
| B2.1 | - | - | - | - | 24,8 | - |
| B2.2 | - | - | - | - | - | 19,2 |
| Cofällung B 1.1/B2.1 = 75:25 | 24,2 | - | - | - | - | - |
| Cofällung B 1.1/B2.1 = 50:50 | - | 24,4 | - | - | - | - |
| Cofällung B1.1/B2.2 = 75:25 | - | - | 22,6 | - | - | - |
| B3 | 32,8 | 32,6 | 34,4 | 33 | 32,2 | 37,8 |
| E1 | 0,75 | 0,75 | 0,75 | 0,75 | 0,75 | 0,75 |
| E2 | 0,12 | 0,12 | 0,12 | 0,12 | 0,12 | 0,12 |
| aₖ^{-20°C} (kJ/m²) | 68 | 77 | 69 | 73 | 65 | 16 |
| MVR (cm³/10 min) | 9,9 | 12,6 | 10,8 | 7,8 | 17,6 | 17,2 |
| ESC-Verhalten Bruch bei εₓ (%) | 2,4 | 2,4 | 2,4 | 2,4 | 0,4 | 1,8 |
| Oberfläche | ++ | + | + | - - | 0 | - |

**Tabelle 2**

| Zusammensetzungen und Eigenschaften der Formmassen | | | | | | |
|---|---|---|---|---|---|---|
| Komponenten (Gew.-Teile) | 7 | 8 | 9 | 10 (Vgl.) | 11 (Vgl.) | 12 (Vgl.) |
| A1 | 58 | 58 | 58 | 58 | 58 | 58 |
| B1.1 | - | - | - | 18 | - | - |
| B2.1 | - | - | - | - | 18,6 | - |
| B2.2 | - | - | - | - | - | 14,4 |
| Cofällung B1.1/B2.1 = 75:25 | 18,2 | - | - | - | - | - |
| Cofällung B 1.1/B2.1 = 50:50 | - | 18,3 | - | - | - | - |
| Cofällung B 1.1B2.2 = 75:25 | - | - | 16,9 | - | - | - |
| B3 | 23,8 | 23,7 | 25,1 | 24 | 23,4 | 27,6 |
| E1 | 0,75 | 0,75 | 0,75 | 0,75 | 0,75 | 0,75 |
| E2 | 0,12 | 0,12 | 0,12 | 0,12 | 0,12 | 0,12 |
| ₐₖ-20°C (kJ/m²) | 93 | 96 | 87 | 87 | 93 | 53 |
| MVR (cm³/10 min) | 11,9 | 13,4 | 11,8 | 9,8 | 16,6 | 17,1 |
| ESC-Verhalten Bruch bei εₓ (%) | 2,4 | 2,4 | 2,2 2,2, | 2,4 | 0,4 | 0,6 |
| Oberfläche | ++ | ++ | + | - - | 0 | - |

**Tabelle 3**

| Zusammensetzungen und Eigenschaften der Formmassen enthaltend Flammschutzmittel | | | | | |
|---|---|---|---|---|---|
| Komponenten (Gew.-Teile) | 13 | 14 | 15 (Vgl.) | 16 (Vgl.) | 17 (Vgl.) |
| A1 | 52,3 | 52,3 | 52,3 | 52,3 | 52,3 |
| A2 | 16,0 | 16,0 | 16,0 | 16,0 | 16,0 |
| B 1.1 | - | - | 9,3 | - | - |
| B2.1 | - | - | - | 9,6 | - |
| B2.2 | - | - | - | - | 7,4 |
| Cofällung B1.1/B2.1 = 75:25 | 9,4 | - | - | - | - |
| Cofällung B 1.1/B2.2 = 75:25 | - | 8,8 | - | - | - |
| B3 | 7,5 | 8,1 | 7,6 | 7,3 | 9,5 |
| C1 | 3,4 | 3,4 | 3,4 | 3,4 | 3,4 |
| C2 | 10,1 | 10,1 | 10,1 | 10,1 | 10,1 |
| D | 0,8 | 0,8 | 0,8 | 0,8 | 0,8 |
| E1 | 0,4 | 0,4 | 0,4 | 0,4 | 0,4 |
| E2 | 0,1 | 0,1 | 0,1 | 0,1 | 0,1 1 |
| aₖ ^{RT} (kJ/m²) | 44 | 41 | 47 | 12 | 11 |
| MVR (cm³/10 min) | 22 | 22 | 21 | 25 | 25 |
| ESC-Verhalten : εₓ (%) | 2,0 | 2,0 | 2,0 | 2,0 | 1,8 |
| UL 94V, 1,5 min | V-0 | n.b. | V-0 | V-0 | n.b. |
| Nachbrennzeit (s) | 4 | n.b. | 5 | 3 | n.b. |
| Oberfläche | ++ | ++ | 0 | 0 | 0 |

| | | | | | |
|---|---|---|---|---|---|
| n.b. = nicht bestimmt | | | | | |

**Tabelle 4**

| Zusammensetzungen und Eigenschaften der Formmassen | | |
|---|---|---|
| Komponenten (Gew.-Teile) | 18 | 19 (Vgl.) |
| A1 | 54 | 54 |
| A2 | 4 | 4 |
| B1.1/B2.1 -B3 | 36 | - |
| B1.1 - B3 | - | 36 |
| B3 | 6 | 6 |
| E1 | 0,75 | 0,75 |
| E2 | 0,12 | 0,12 |
| Oberfläche | + | - - |
| | siehe Abb.1 | siehe Abb.2 |

## Patentansprüche

1. Zusammensetzung enthaltend
A) einen Thermoplasten oder eine Mischung von Thermoplasten ausgewählt aus mindestens einem aus der Gruppe der Polycarbonate, Polyestercarbonate, Polyamide, Polyalkylenterephthalate und Polyoxymethylen und
B) eine durch Cofällung erhaltene Mischung aus mindestens zwei Pfropfpolymerisaten B.1 und B2, wobei die Pfropfpolymerisate B.1 und B.2 durch Emulsionspolymerisation hergestellt wird, wobei das Pfropfpolymerisat B.1 durch Redox-Initiierung und das Pfropfpolymerisat B.2 durch Persulfat-Initierung hergestellt werden.

2. Zusammensetzung gemäß Anspruch 1 enthaltend 10 bis 99,5 Gew.-Teile Komponente A) und 0,5 bis 90 Gew.-Teile Komponente B).

3. Zusammensetzung gemäß Anspruch 1 enthaltend Flammschutzmittel.

4. Zusammensetzung gemäß Anspruch 1 enthaltend fluorierte Polyolefine.

5. Zusammensetzung gemäß Anspruch 1 enthaltend Vinyl(co)-polymerisate.

6. Zusammensetzung gemäß Anspruch 3 enthaltend Flammschutzmittel ausgewählt aus mindestens einem aus der Gruppe der mono- und oligomeren Phosphorverbindungen.

7. Zusammensetzungen gemäß Anspruch 6 enthaltend Phosphorverbindungen der Formel 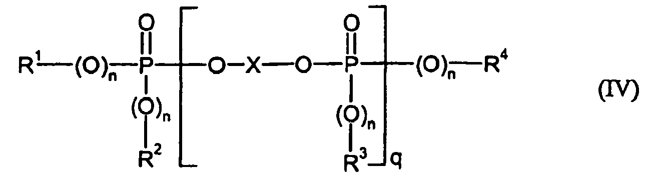 worin
R¹, R², R³ und R⁴, unabhängig voneinander jeweils gegebenenfalls halogeniertes C₁ bis C₈-Alkyl, jeweils gegebenenfalls durch Alkyl und/oder Halogen, substituiertes C₅ bis C₆ Cycloalkyl, C₆ bis C₂₀-Aryl oder C₇ bis C₁₂-Aralkyl,
n unabhängig voneinander, 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

8. Zusammensetzungen gemäß Anspruch 5 enthaltend Vinyl(co)polymerisate auf Basis von mindestens einem Monomeren aus der Gruppe der Vinylaromaten, Vinylcyanide, (Meth)Arcrylsäure-(C₁-C₈)-Alkylester, ungesättigte Carbonsäuren sowie Derivate ungesättigter Carbonsäuren.

9. Zusammensetzungen gemäß Anspruch 8 enthaltend Vinyl(co)polymerisate erhältlich aus 50 bis 99 Gew.-Teilen ausgewählt aus mindestens einem Monomer ausgewählt aus Vinylaromaten und (Meth)Acrylsäure-(C₁-C₈)-Alkyl-estern und 1 bis 50 Gew.-Teilen mindestens einem Monomer ausgewählt aus Vinylcyaniden und (Meth)Acrylsäure-(C₁-C₈)-Alkylester.

10. Zusammensetzungen gemäß Anspruch 1 enthaltend mindestens einen Thermoplasten ausgewählt aus Polyamid und Polycarbonat.

11. Zusammensetzungen gemäß Anspruch 1 enthaltend eine durch Cofällung erhaltene Mischung aus mindestens zwei Pfropfpolymerisaten B.1 und B.2 von jeweils
i) 5 bis 95, vorzugsweise 30 bis 80 Gew.-%, wenigstens eines Vinylmonomeren auf
ii) 95 bis 5, vorzugsweise 70 bis 20 Gew.-% einer oder mehrerer Pfropf grundlagen mit Glasübergangstemperaturen <10°C.

12. Zusammensetzungen gemäß Anspruch 11, wobei Monomere i) Gemische sind aus
i1) 50 bis 99 Gew.-Teilen mindestens eines Monomeren ausgewählt aus Vinylaromaten, kernsubstituierten Vinylaromaten und (Meth)Acrylsäure-(C₁-C₈)-Alkylester und
i2) 1 bis 50 Gew.-Teilen mindestens einem Monomer ausgewählt aus Vinylcyaniden, (Meth)Acrylsäure-(C₁-C₈)-Alkylester und Derivate ungesättigter Carbonsäuren.

13. Zusammensetzungen gemäß Anspruch 12, wobei Monomere i1) ausgewählt sind aus mindestens einem der Monomere Styrol, α-Methylstyrol und Methylmethacrylat, Monomere i2) ausgewählt sind aus mindestens einem der Monomere Acrylnitril, Maleinsäureanhydrid und Methylmethacrylat.

14. Zusammensetzungen gemäß Anspruch 11, wobei die Pfropfgrundlage ausgewählt ist aus mindestens einer aus der Gruppe der Dienkautschuke, EP(D)M-Kautschuke und Acrylatkautschuke.

15. Zusammensetzungen gemäß Anspruch 14, wobei die Pfropfgrundlage ausgewählt ist aus mindestens einer aus Polybutadien und Butadien/Styrol-Copolymerisaten.

16. Zusammensetzungen gemäß Anspruch 1, wobei das Gewichtsverhältnis von Pfropfpolymerisat B.1 :B.2 95:5 bis 5:95 beträgt.

17. Zusammensetzungen gemäß Anspruch 16, wobei das Gewichtsverhältnis von Pfropfpolymerisat B.1:B.2 90:10 bis 25:75 beträgt.

18. Zusammensetzungen gemäß Anspruch 17 wobei das Gewichtsverhältnis von Pfropfpolymerisat B.1:B.2 85:15 bis 50:50 beträgt.

19. Zusammensetzungen gemäß Anspruch 5 enthaltend Vinyl(co)polymerisate B.3 in einem Gewichtsverhältnis von Pfropfpolymerisat B zu Vinyl(co)polymerisat B.3 von 90:10 bis 10:90.

20. Zusammensetzungen gemäß Anspruch 19, wobei das Gewichtsverhältnis von B:B.3 80:20 bis 30:70 beträgt.

21. Zusammensetzungen gemäß Anspruch 1 enthaltend 0 bis 20 Gew.-Teile Flammschutzmittel.

22. Zusammensetzungen gemäß Anspruch 1 enthaltend 20 bis 98,5 Gew.-Teile A) und 1,5 bis 80 Gew.-Teile B).

23. Zusammensetzungen gemäß Anspruch 22 enthaltend 30 bis 98 Gew.-Teile A) und 2 bis 70 Gew.-Teile B).

24. Zusammensetzungen gemäß Anspruch 1 enthaltend Polymeradditive.

25. Verwendung der Zusammensetzungen gemäß Anspruch 1 zur Herstellung von Formteilen.

26. Formteile erhältlich aus Zusammensetzungen gemäß Anspruch 1 bis 24.

## Claims

1. Composition comprising
A) a thermoplastic or a mixture of thermoplastics selected from at least one from the group of the polycarbonates, polyester carbonates, polyamides, polyalkylene terephthalates and polyoxymethylene, and
B) a mixture, obtained by co-precipitation, of at least two graft polymers B.1 and B.2, wherein the graft polymers B.1 and B.2 are prepared by emulsion polymerisation, wherein the graft polymer B.1 is prepared by redox initiation and the graft polymer B.2 is prepared by persulfate initiation.

2. Composition according to claim 1 comprising from 10 to 99.5 parts by weight of component A) and from 0.5 to 90 parts by weight of component B).

3. Composition according to claim 1 comprising flameproofing agents.

4. Composition according to claim 1 comprising fluorinated polyolefins.

5. Composition according to claim 1 comprising vinyl (co)polymers.

6. Composition according to claim 3 comprising flameproofing agents selected from at least one from the group of the monomeric and oligomeric phosphorus compounds.

7. Compositions according to claim 6 comprising phosphorus compounds of the formula 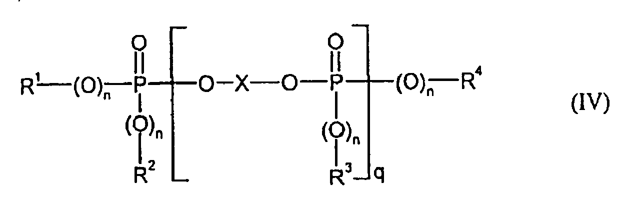 wherein
R¹, R², R³ and R⁴ each independently of the others represents optionally halogenated C₁- to C₈-alkyl, or C₅- to C₆-cycloalkyl, C₆- to C₂₀-aryl or C₇- to C₁₂-aralkyl each optionally substituted by alkyl and/or by halogen,
each of the substituents n independently of the others represents 0 or 1,
q represents from 0 to 30, and
X represents a mono- or poly-nuclear aromatic radical having from 6 to 30 carbon atoms, or a linear or branched aliphatic radical having from 2 to 30 carbon atoms, which can be OH-substituted and can contain up to 8 ether bonds.

8. Compositions according to claim 5 comprising vinyl (co)polymers based on at least one monomer from the group of the vinyl aromatic compounds, vinyl cyanides, (meth)acrylic acid (C₁-C₈)-alkyl esters, unsaturated carboxylic acids and derivatives of unsaturated carboxylic acids.

9. Compositions according to claim 8 comprising vinyl (co)polymers obtainable from 50 to 99 parts by weight selected from at least one monomer selected from vinyl aromatic compounds and (meth)acrylic acid (C₁-C₈)-alkyl esters and 1 to 50 parts by weight of at least one monomer selected from vinyl cyanides and (meth)acrylic acid (C₁-C₈)-alkyl esters.

10. Compositions according to claim 1 comprising at least one thermoplastic selected from polyamide and polycarbonate.

11. Compositions according to claim 1 containing a mixture, obtained by co-precipitation, of at least two graft polymers B.1 and B.2 of in each case
i) from 5 to 95 wt.%, preferably from 30 to 80 wt.%, of at least one vinyl monomer with
ii) from 95 to 5 wt.%, preferably from 70 to 20 wt.%, of one or more graft bases having glass transition temperatures < 10°C.

12. Compositions according to claim 11, wherein monomers i) are mixtures of
i1) from 50 to 99 parts by weight of at least one monomer selected from vinyl aromatic compounds, vinyl aromatic compounds substituted on the ring, and (meth)acrylic acid (C₁-C₈)-alkyl esters, and
i2) from 1 to 50 parts by weight of at least one monomer selected from vinyl cyanides, (meth)acrylic acid (C₁-C₈)-alkyl esters and derivatives of unsaturated carboxylic acids.

13. Compositions according to claim 12, wherein monomers i1) are selected from at least one of the monomers styrene, α-methylstyrene and methyl methacrylate, and monomers i2) are selected from at least one of the monomers acrylonitrile, maleic anhydride and methyl methacrylate.

14. Compositions according to claim 11, wherein the graft base is selected from at least one from the group of the diene rubbers, EP(D)M rubbers and acrylate rubbers.

15. Compositions according to claim 14, wherein the graft base is selected from at least one from polybutadiene and butadiene/styrene copolymers.

16. Compositions according to claim 1, wherein the ratio by weight of graft polymer B.1:B.2 is from 95:5 to 5:95.

17. Compositions according to claim 16, wherein the ratio by weight of graft polymer B.1:B.2 is from 90:10 to 25:75.

18. Compositions according to claim 17, wherein the ratio by weight of graft polymer B.1:B.2 is from 85:15 to 50:50.

19. Compositions according to claim 5 comprising vinyl (co)polymers B.3 in a ratio by weight of graft polymer B to vinyl (co)polymer B.3 of from 90:10 to 10:90.

20. Compositions according to claim 19, wherein the ratio by weight ofB:B.3 is from 80:20 to 30:70.

21. Compositions according to claim 1 comprising from 0 to 20 parts by weight of flameproofing agents.

22. Compositions according to claim 1 comprising from 20 to 98.5 parts by weight of A) and from 1.5 to 80 parts by weight of B).

23. Compositions according to claim 22 comprising from 30 to 98 parts by weight of A) and from 2 to 70 parts by weight of B).

24. Compositions according to claim 1 comprising polymer additives.

25. Use of the compositions according to claim 1 in the production of mouldings.

26. Mouldings obtainable from compositions according to claims 1 to 24.

## Revendications

1. Composition contenant
A) un thermoplastique ou un mélange de thermoplastiques, sélectionné parmi au moins un composé appartenant au groupe des polycarbonates, des polyestercarbonates, des polyamides, des polyalkylènetéréphtalates et du polyoxyméthylène et
B) un mélange obtenu par coprécipitation d'au moins deux polymères greffés B.1 et B.2, les polymères greffés B.1 et B.2 étant produits par polymérisation en émulsion, le polymère greffé B.1 étant préparé par amorçage redox et le polymère greffé B.2 par amorçage par le persulfate.

2. Composition selon la revendication 1, contenant 10 à 99,5 parties en poids du composant A) et 0,5 à 90 parties en poids du composant B).

3. Composition selon la revendication 1, contenant des agents pare-flammes.

4. Composition selon la revendication 1, contenant des polyoléfines fluorées.

5. Composition selon la revendication 1, contenant des (co)polymères de vinyle.

6. Composition selon la revendication 3, contenant des agents pare-flammes sélectionnés parmi au moins un composé appartenant au groupe des composés de phosphore mono- et oligomères.

7. Compositions selon la revendication 6, contenant des composés de phosphore de la formule 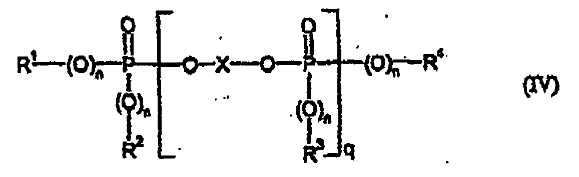 dans laquelle
R¹, R², R³ et R⁴ représentent, indépendamment les uns des autres, un alkyle en C₁ à C₈ chaque fois le cas échéant halogéné, un cycloalkyle en C₅ à C₆, un aryle en C₆ à C₂₀ ou un aralkyle en C₇ à C₁₂ chaque fois le cas échéant substitué par un alkyle et/ou un halogène,
les n correspondent indépendamment les uns des autres à 0 ou à 1,
q est compris entre 0 et 30 et
X est un radical aromatique mono- ou polynucléaire comportant 6 à 30 atomes de C ou un radical aliphatique linéaire ou ramifié présentant 2 à 30 atomes de C, qui peut être hydroxysubstitué et comporter jusqu'à 8 liaisons éther.

8. Compositions selon la revendication 5 contenant des (co)polymères de vinyle à base d'au moins un monomère sélectionné parmi le groupe des composés vinylaromatiques, des cyanures de vinyle, des esters alkyliques (en C₁-C₈) de l'acide (méth)acrylique, des acides carboxyliques insaturés et des dérivés d'acides carboxyliques insaturés.

9. Compositions selon la revendication 8 contenant des (co)polymères de vinyle pouvant être obtenus à partir de 50 à 99 parties en poids d'au moins un monomère sélectionné parmi les composés vinylaromatiques et les esters alkyliques (en C₁-C₈) de l'acide (méth)acrylique, et de 1 à 50 parties en poids d'au moins un monomère sélectionné parmi les cyanures de vinyle et les esters alkyliques (en C₁-Cₐ) de l'acide (méth)acrylique.

10. Compositions selon la revendication 1 contenant au moins un thermoplastique sélectionné parmi le polyamide et le polycarbonate.

11. Compositions selon la revendication 1 contenant un mélange obtenu par coprécipitation d'au moins deux polymères greffés B,1 et B.2, constitués chacun de
i) 5 à 95, de préférence 30 à 80 % en poids d'au moins un monomère de vinyle sur
ii) 95 à 5, de préférence 70 à 20 % en poids d'une ou de plusieurs bases de greffage possédant une température de transition vitreuse < 10 °C.

12. Compositions selon la revendication 11, dans lesquelles les monomères i) sont des mélanges de
i1) 50 à 99 parties en poids d'au moins un monomère sélectionné parmi les composés vinylaromatiques, les composés vinylaromatiques substitués sur le noyau et les esters alkyliques (en C₁-C₈) de l'acide (méth)acrylique et
i2) 1 à 50 parties en poids d'au moins un monomère sélectionné parmi les cyanures de vinyle, les esters alkyliques (en C₁-C₈) de l'acide (méth)acrylique et les dérivés d'acides carboxyliques insaturés.

13. Compositions selon la revendication 12, dans lesquelles les monomères i1) sont sélectionnés parmi au moins un des monomères styrène, α-méthylstyrène et méthylméthacrylate, et les monomères i2) sont sélectionnés parmi au moins un des monomères acrylonitrile, anhydride maléique et méthylméthacrylate..

14. Compositions selon la revendication 11, dans lesquelles la base de greffage est sélectionnée parmi au moins un des composés du groupe des caoutchoucs diéniques, des caoutchoucs EP(D)M et des caoutchoucs acrylate.

15. Compositions selon la revendication 14, dans lesquelles la base de greffage est sélectionnée parmi au moins un des composés du groupe du polybutadiène et des copolymères de butadiène/styrène.

16. Compositions selon la revendication 1, dans lesquelles le rapport pondéral des polymères greffés B.1 et B.2 est compris entre 95:5 et 5:95.

17. Compositions selon la revendication 16, dans lesquelles le rapport pondéral des polymères greffés B.1 et B.2 est compris entre 90:10 et 25:75.

18. Compositions selon la revendication 17, dans lesquelles le rapport pondéral des polymères greffés B.1 et B.2 est compris entre 85:15 et 50:50.

19. Compositions selon la revendication 5 contenant des (co)polymères de vinyle B.3 dans un rapport pondéral du polymère greffé B et du (co)polymère de vinyle B.3 compris entre 90:10 et 10:90.

20. Compositions selon la revendication 19, dans lesquelles le rapport pondéral de B et de B.3 est compris entre 80:20 et 30:70.

21. Compositions selon la revendication 1 contenant 0 à 20 parties en poids d'agent pare-flammes.

22. Compositions selon la revendication 1 contenant 20 à 98,5 parties en poids de A) et 1,5 à 80 parties en poids de B).

23. Compositions selon la revendication 22 contenant 30 à 98 parties en poids de A) et 2 à 70 parties en poids de B).

24. Compositions selon la revendication 1 contenant des additifs de polymères.

25. Utilisation des compositions selon la revendication 1 pour la production de pièces moulées.

26. Pièces moulées pouvant être obtenues à partir des compositions selon les revendications 1 à 24.
